# EUROPEAN PATENT SPECIFICATION

(11) **EP 2 642 819 B1**
(45) Date of publication and mention of the grant of the patent: **12.08.2015**
(21) Application number: 13159724.7
(22) Date of filing: 18.03.2013
(51) Int. Cl.: H05B 6/06

(54) **Induction heating cooking apparatus and control method thereof**
Induktionswärme-Kochvorrichtung und Steuerverfahren dafür
Appareil de cuisson avec chauffage par induction et son procédé de commande

(30) Priority: 21.03.2012 KR 20120028914
(43) Date of publication of application: 25.09.2013
(73) Proprietor: LG ELECTRONICS INC., Youngdungpo-gu Seoul 150-721 (KR)
(72) Inventor: Moon, Hyunwook, Seoul (KR); Park, Byeongwook, Seoul (KR)
(74) Representative: Vossius & Partner Patentanwälte Rechtsanwälte mbB

(56) References cited:
- WO-A1-2010/069883
- WO-A1-2011/107328
- FR-A1- 2 839 604
- US-A- 3 953 783
- US-A1- 2007 241 101
- US-A1- 2011 226 756
- US-B1- 6 528 770

## Description

The present disclosure relates to a cooking apparatus and, more particularly, to an induction heating cooking apparatus having a plurality of heating coils.

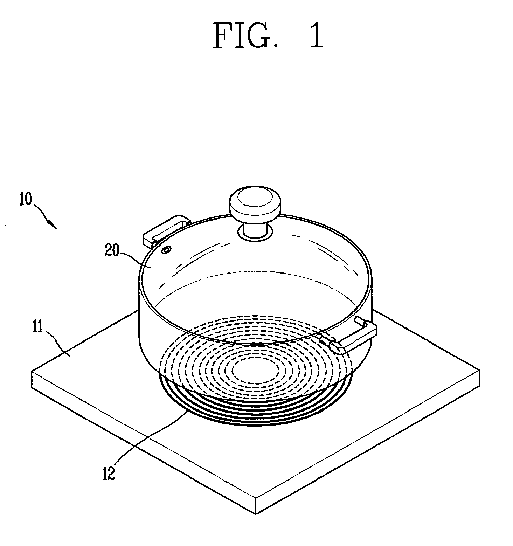

An induction heating cooking apparatus is a device for cooking food by using heat generated by eddy current loss and hysteresis loss generated in a cooking vessel (or a cooking container) made of metal when an AC magnetic field is applied to the cooking vessel. The induction heating cooking apparatus has an advantage in that it has high efficiency. As illustrated in FIG. 1, an induction heating cooking apparatus 10 includes a heating coil 12 provided in a lower portion of an upper plate 11 on which a vessel 20 is placed, and as the heating coil is heated, a food item within the vessel is heated. The induction heating cooking apparatus further includes an inverter serving to apply a high frequency current to the heating coil 12.

In general, the inverter of the induction heating cooking apparatus may be implemented as one of a half-bridge type induction heating cooking apparatus, a full-bridge type induction heating cooking apparatus, a class E- type induction heating cooking apparatus, and the like. Also, in general, a single heating coil is connected to a single inverter.

WO 2010/069883 A1 discloses an induction heating cooking apparatus including a heating unit for heating a vessel placed in a heating region, the heating unit comprising a plurality of heating coils forming heating regions, respectively, wherein the induction heating cooking apparatus comprises: a plurality of inverters configured to supply a driving voltage to one or more of the heating coils; a control unit configured to detect one or more heating regions in which the vessel is placed and control the plurality of inverters according to a control; and a plurality of relays connecting the one or more heating coils corresponding to the heating regions detected by the control unit and the one or more of the inverters, on the basis of respective opening and closing.

Recently, products, such as a free cook zone type product, which detect a position of a vessel and heat the vessel no matter where the vessel is placed on an upper plate thereof have been introduced to the market of induction heating cooking apparatuses. In order to maximize heating efficiency, the amount of heating coils is advantageously required to be increased, and in this case, as the amount of heating coils is increased, the amount of inverters for driving them is also increased.

Therefore, an aspect of the detailed description is to provide an induction heating cooking apparatus in which a large amount of heating coils are operated, while minimizing the amount of inverters through a simple topology, and a control method thereof.

Another aspect of the detailed description is to provide an induction heating cooking apparatus in which a heating coil is connected to or separated from an inverter by using a relay and heating coils are connected in series to an inverter in order to reduce a current flowing in the heating coils, and a control method thereof.

To achieve these and other advantages and in accordance with the invention, an induction heating cooking apparatus includes a heating unit for !heating a vessel placed in a heating region, the heating unit comprising a plurality of heating coils forming heating regions, respectively, wherein the induction heating cooking apparatus comprises: a plurality of inverters configured to supply a driving voltage to one or more of the heating coils;

a sensing unit configured to sense a current of the heating coils and output the current value; a control unit configured to compare the current value with a predetermined reference current value and detect one or more heating regions in which the vessel is placed on the basis of the comparison results and control the plurality of inverters according to a control command; and a plurality of relays connecting the one or more heating coils corresponding to the heating regions detected by the control unit and the one or more of the inverters, on the basis of respective opening and closing signals; and wherein heating coils connectable to a same inverter, among the heating coils corresponding to the detected heating regions, are connected in series to each other by relays.

To achieve these and other advantages and in accordance with the invention a method for controlling an induction heating cooking apparatus includes a heating unit configured to include a plurality of heating coils forming heating regions and heat a vessel placed in each heating region, respectively, a plurality of inverters configured to supply a driving voltage to one or more of the heating coils, and a plurality of relays, the method comprising: sensing a current of the heating coils and outputting a current value; comparing the current value with a predetermined reference current value; detecting one or more heating regions in which the vessel is placed on the basis of the comparison results; connecting the one or more heating coils corresponding to the heating regions and one or more of the inverters by the plurality of relays; receiving a control command; and driving a corresponding inverter according to the control command, wherein heating coils connectable to a same inverter, among the heating coils corresponding to the detected heating regions, are connected in series to each other by relays.

The vessel can be effectively heated by using a plurality of heating coils regardless of a position of the vessel.

Since the heating coils are connected in series, a current flowing in the heating coil can be lowered, and thus, a rated current of the inverter can be lowered.

According to embodiments of the present invention, since a plurality of heating coils are connected to a smaller amount of inverters through relays, only a heating coil on which a vessel is placed, among the plurality of heating coils, can be heated.

In the embodiments of the present invention, since relays and heating coils are connected such that a larger amount of heating coils are operated, while minimizing the amount of inverters, manufacturing cost can be reduced, operation efficiency can be increased, and stability of the cooking apparatus can be enhanced.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the detailed description.

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a perspective view illustrating the exterior of a general induction heating cooking apparatus;
FIGS. 2 and 3 are block diagrams of induction heating cooking apparatuses according to embodiments of the present invention;
FIG. 4 is a view illustrating the layout of heating coils according to an embodiment of the present invention;
FIG. 5 is a connection diagram of the heating coils and relays according to an embodiment of the present invention;
FIG. 6 is a view illustrating connections of heating coils according to a relay operation in FIG. 5;
FIG. 7 is a connection diagram of the heating coils and relays according to another embodiment of the present invention;
FIG. 8 is a connection diagram of the heating coils and relays according to another embodiment of the present invention;
FIG. 9 is a view illustrating connections of heating coils according to a relay operation in FIG. 8;
FIG. 10 is a cross-sectional view illustrating flat litz wire type heating coils; and
FIG. 11 is a flow chart schematically illustrating a method for controlling an induction heating cooking apparatus according to an embodiment of the present invention.

Description will now be given in detail of the exemplary embodiments, with reference to the accompanying drawings. For the sake of brief description with reference to the drawings, the same or equivalent components will be provided with the same reference numbers, and description thereof will not be repeated.

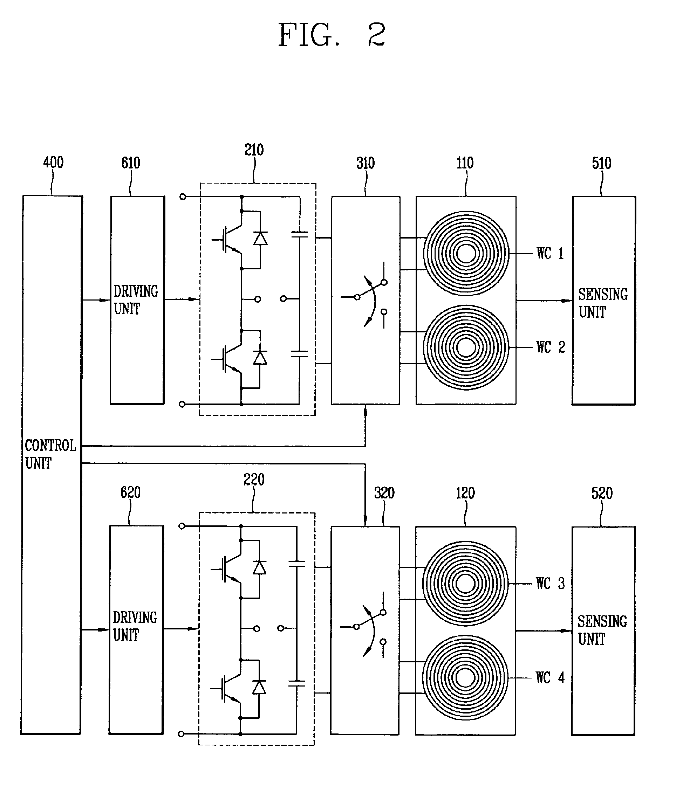

Referring to FIG. 2, an induction heating cooking apparatus according to an embodiment of the present invention, heating units 110 and 120 including a plurality of heating coils forming heating regions, respectively, and heating a vessel (or a container) placed in the heating regions, a plurality of inverters 210 and 220 configured to supply a driving voltage to one or more of the heating coils, a control unit 400 configured to detect one or more heating regions in which the vessel is placed and controlling the plurality of inverters according to a control command, and a plurality of relays 310 and 320 configured to connect one or more of the heating coils corresponding to the heating region detected by the control unit 400 and one or more of the inverters, on the basis of opening and closing signals with respect to each of the relays.

The heating units 110 and 120 may further include resonance capacitors connected to the heating coils to generate resonance, respectively. Namely, the heating units 110 and 120 may form a resonance circuit comprised of the heating coil and the resonance capacitor to heat the vessels placed in the heating regions, respectively.

The inverters 210 and 220 include a switching element switched according to a driving signal from the driving units 610 and 620, respectively. Here, in general, the switching element is a high frequency semiconductor.

The switching element may be configured as one of a bipolar junction transistor (BJT), a metal oxide semiconductor field effect transistor (MOSFET), an insulated gate polar transistor (IGBT), and the like. The inverters 210 and 220 may further include a backward diode. The backward diode may perform freewheeling function.

The relays 310 and 320 connect the heating coils and the inverters 210 and 220. Namely, the relays 310 and 320 connect one or more heating coils corresponding to the heating regions detected by the control unit 400 and one or more of the inverters 210 and 220. The relays 310 and 320 are mechanical and electrical elements operating according to an opening and closing signal from the control unit 400 to open and close lines, respectively.

For example, in a case in which the switching elements are IGBTs, the driving units 610 and 620 may be, for example, gate driving ICs, or the like, for outputting a gate driving signal to the inverters 210 and 220. The driving units 610 and 620 receive a control signal from the control unit 400, respectively. The control unit 400 outputs a control signal for regulating a degree of heating the heating coils according to a control command from a user input through an input unit (not shown), to the driving units 610 and 620. In this case, the control signal may be a voltage or frequency variable signal.

The induction heating cooking apparatus may further include sensing units 510 and 520 detecting a current of the heating coils and outputting a corresponding current value. The control unit 400 compares the current value with a predetermined reference current value, and detects the one or more heating regions in which the vessel is placed, on the basis of the comparison results. For example, when the control unit 400 sequentially applies a high frequency voltage to the respective coils, the sensing units 510 and 520 sense a current generated in each heating coil, and output the current value to the control unit 400. The control unit 400 compares the current value output from the sensing units 510 and 520 and a reference current value to detect a heating region. Here, the reference current value may be measured and set in advance through an experiment, or the like, according to the amount, form, position, connection relationship, and the like, of the heating coils. Each of the sensing units 510 and 520 may include various types of sensors for sensing vibration, weight, magnetic field, and the like.

The amount of the inverters 210 and 220 is less than the amount of the heating coils WC. Namely, each of the plurality of inverters 210 and 220 is connected to some of the plurality of heating coils in order to supply the driving voltage thereto. Among the plurality of heating coils, heating coils that may be connectable to one inverter (i.e., a same inverter) are connected to each other by the relays.

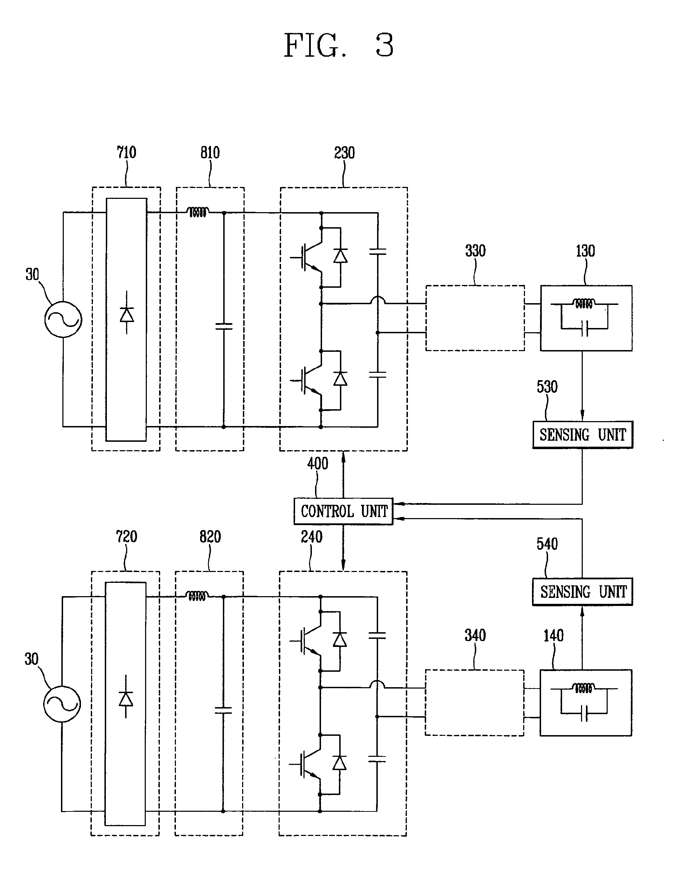

Referring to FIG. 3, the induction heating cooking apparatus according to another embodiment of the preset invention includes converter 710 and 720 converting an input voltage from a commercial alternating current (AC) power source into a direct current (DC) voltage and outputting the same, respectively, smoothing units 810 and 820 smoothing the output DC voltage from the converters 700, respectively, heating units 130 and 140 including a plurality of heating coils forming heating regions and heating vessels placed in the heating regions and resonance capacitors connected to the heating coils to generate resonance, a plurality of inverters 230 and 240 converting the smoothed DC voltage from the smoothing units 810 and 820 into driving voltages, and supplying the driving voltages to the one or more of the heating coils, an input unit (not shown) receiving a control command with respect to the heating units 130 and 140, a control unit 400 detecting one or more heating regions in which the vessels are placed, and generating the control signal for controlling the plurality of inverters according to the control command, and a plurality of relays 330 and 340 connecting one or more of the heating coils corresponding to the heating regions detected by the control unit 400 and one or more of the inverters 230 and 240, on the basis of opening and closing signals of the respective relays.

A description of the same elements as those of FIG. 2 will be omitted.

In FIG. 2 and 3, the inverters 210, 220, 230, and 240 are illustrated as half-bridge type inverters, but the present invention is not limited thereto and the inverters 210, 220, 230, and 240 may also be implemented as full-bridge type inverters in the same manner. Also, two pairs of heating coils (totaling four heating coils), two inverters, and two relays are illustrated, but the present invention is not limited thereto and three or more pairs of heating coils, three or more inverters, and three or more relays may also be implemented as necessary.

The converters 710 and 720 are connected to commercial AC power sources 30, and convert an AC voltage input from the commercial AC power sources 30 into a DC voltage, respectively. As the converters 710 and 720, in general, a power bridge diode (PBD) is used. The DC voltage in this case has a waveform of a pulsating current.

The smoothing units 810 and 820 remove harmonics from the DC voltage having a pulsating current waveform output from the converters 710 and 720 through a reactor, and smooth it through a smoothing capacitor, respectively. A voltage applied to the smoothing capacitor in this case is a DC link voltage.

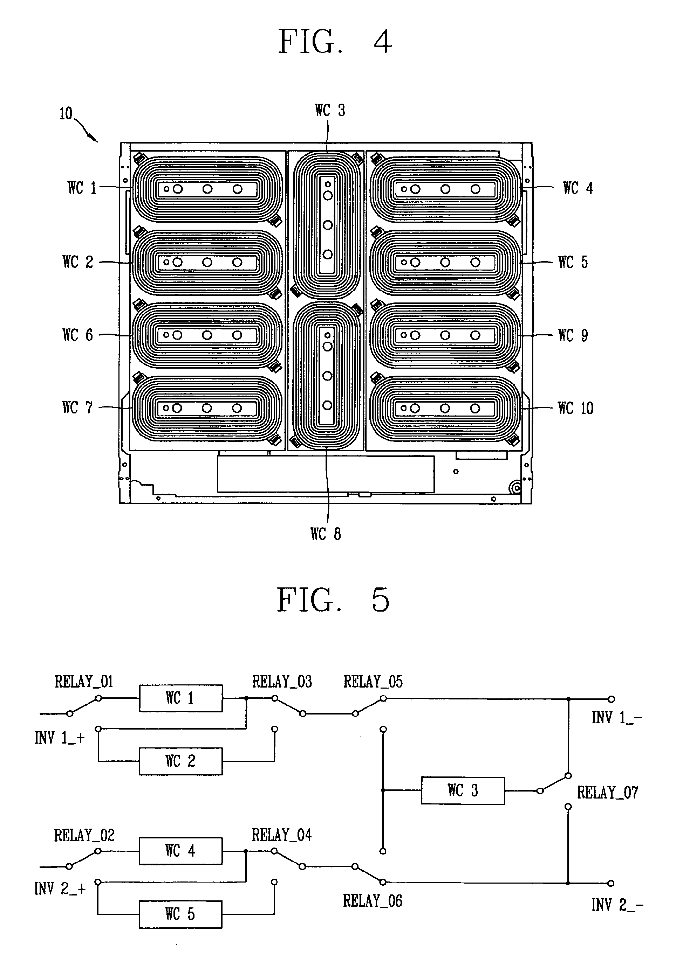

An operation of the induction heating cooking apparatus according to embodiments of the present invention will be described with reference to FIGS. 4 through 8.

As illustrated in FIGS. 5 through 7, in a case in which two inverters are formed to supply power to heating coils, a heating unit may include a first coil unit including two or more heating coils driven by a first inverter, connected to each other in series, and forming a first heating region, a second coil unit including two or more heating coils driven by a second inverter, connected to each other in series, and forming a second heating region, and a third coil unit including one or more heating coils driven by the first inverter or the second inverter, connected to the first coil unit or the second coil unit in series or directly connected to the first inverter or the second inverter to form a third heating region.

FIG. 4 illustrates an example of a heating unit including ten heating coils. Referring to FIG. 5, five heating coils, among the heating coils of FIG. 4, and two inverters are connected, and a plurality of relays are provided between the heating coils and the inverters.

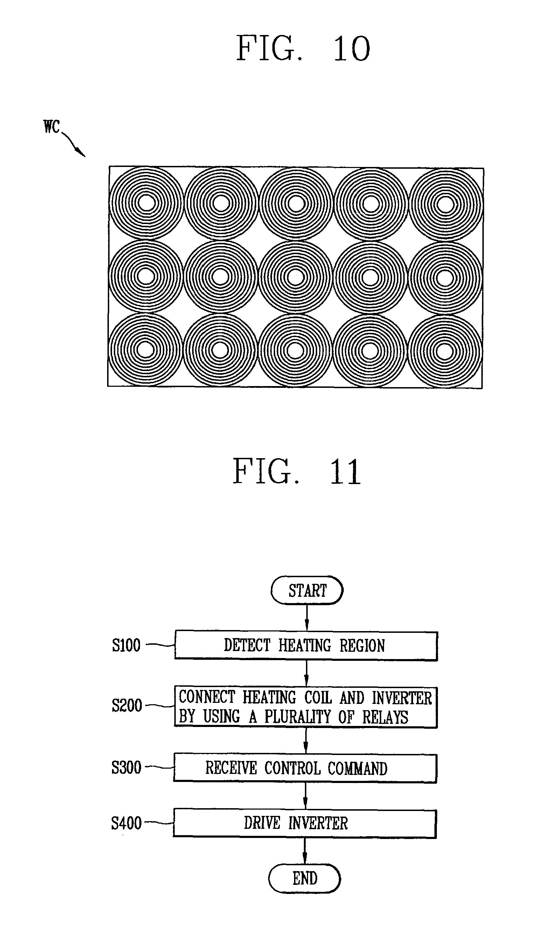

The heating coils illustrated in FIG. 4 may be configured as flat litz wire type heating coils as illustrated in FIG. 10. The flat litz wire type coils may be formed by compressing circular litz wire type heating coils. In the case of the flat litz wire type heating coils, they may be wound by a relatively large number of turns over a limited width (or over a predetermined width).

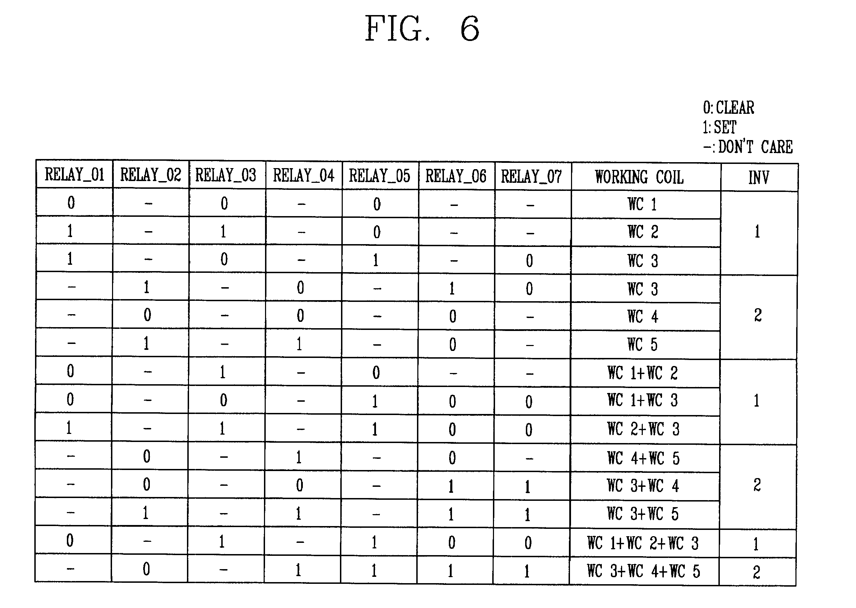

Referring to FIGS. 5 and 6, first inverter INV 1 and second inverter INV 2 apply a high frequency voltage to heating coils 1 to 5 WC 1 to WC 5 through relays RELAY_01 to RELAY _07, respectively.

A case in which a vessel is placed in a heating region handled by the heating coil 1 WC 1 will be described. The heating coil 1 WC 1 receives power from the inverter 1 INV1, and the heating coil 1 WC 1 and the inverter 1 INV1 are connected by the relay 1 RELAY_01, the relay 3 RELAY_03, and the relay 5 RELAY_05. Namely, in order to operate the heating coil 1 WC1, the control unit outputs an opening and closing signal 0 to the relay 1 RELAY_01, the opening and closing signal 0 to the relay 3 RELAY_03, and the opening and closing signal 0 to the relay 5 RELAY_05, respectively.

Similarly, in the case of the heating coil 2 WC 2, the control unit outputs an opening and closing signal 1 to the relay 1 RELAY_01, the opening and closing signal 1 to the relay 3 RELAY_03, and the opening and closing signal 0 to the relay 5 RELAY_05.

Meanwhile, the heating coil 3 WC 3 is connected to the first inverter 1 INV 1 by the relay 1 RELAY_01, relay 3 RELAY_03, the relay 5 RELAY_05, and a relay 7 RELAY_07. In order to heat the heating coil 3 WC3, the control unit outputs the opening and closing signal 1 to the relay 1 RELAY_01, the opening and closing signal 0 to the relay 3 RELAY_03, the opening and closing signal 1 to the relay 5 RELAY_05, and the opening and closing signal 0 to the relay 7 RELAY_07.

The heating coil 4 WC 4 and the heating coil 5 WC 5 receive power from the inverter 2 INV 2. Operations of the heating coil 4 WC 4 and the heating coil 5 WC 5 are referred to FIGS. 5 and 6.

When the vessel is placed to extend over the heating coil 1 WC 1 and the heating coil 2 WC 2, the control unit may output the opening and closing signal 0 to the relay 1 RELAY_01, the opening and closing signal 1 to the relay 3 RELAY_03, and the opening and closing signal 0 to the relay 5 RELAY_05 to allow the inverter 1 INV 1 to supply power to the heating coil 1 WC 1 and the heating coil 2 WC 2. Here, the heating coil 1 WC 1 and the hating coil 2 WC 2 are connected in series. Namely, since two heating coils are connected to the single inverter in series, rather than in parallel, a current flowing in the heating coils is lowered. Thus, a rate current of the switching elements, e.g., the IGBT, the MOSFET, and the like, in the inverter can be lowered.

When the vessel is placed to extend over the heating coil 3 WC 3 to the heating coil 5 WC 5, the control unit outputs the opening and closing signal 0 to the relay 2 RELAY_02 and the opening and closing signal 1 to the relay 4 RELAY_04 to the relay 7 RELAY_07 to allow the inverter 2 INV 2 to supply power to the heating coil 3 WC 3 to the heating coil 5 WC 5. Also, in this case, the heating coil 3 WC 3 to the heating coil 5 WC 5 are connected in series.

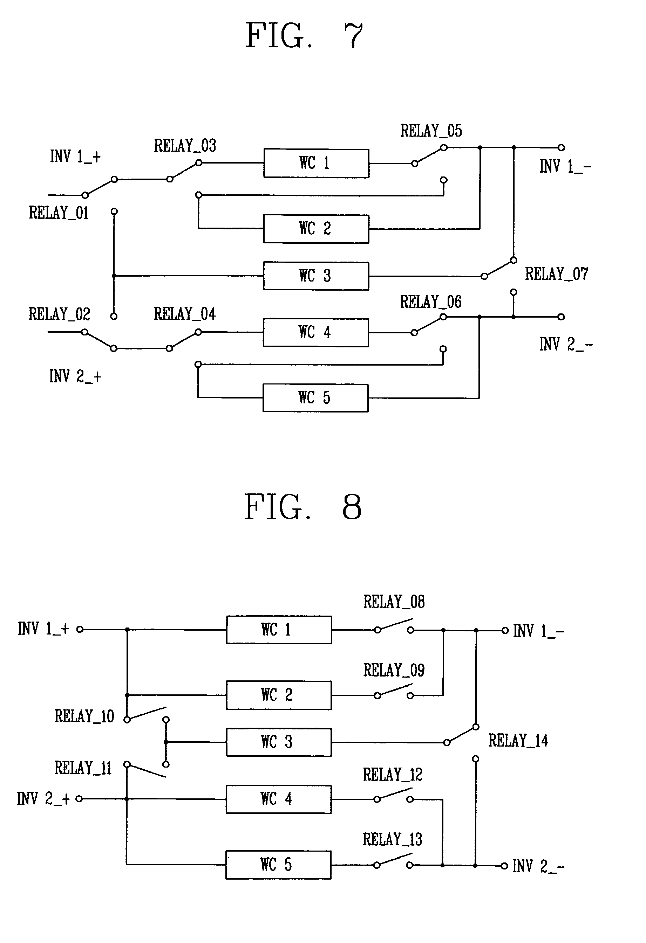

FIG. 7 shows another example of connections of the heating coils and the relays. Namely, although the same amount of inverters, heating coils, and relays is provided, the induction heating cooking apparatus illustrated in FIG. 7 may have connections different from those of the induction heating cooking apparatus of FIG. 5. Also, in this case, similarly, the control unit may output and closing signals to the relays connecting the heating coils corresponding to heating regions in which a vessel is placed, to heat the heating coils. Of course, number of cases may be different from that of FIG. 6.

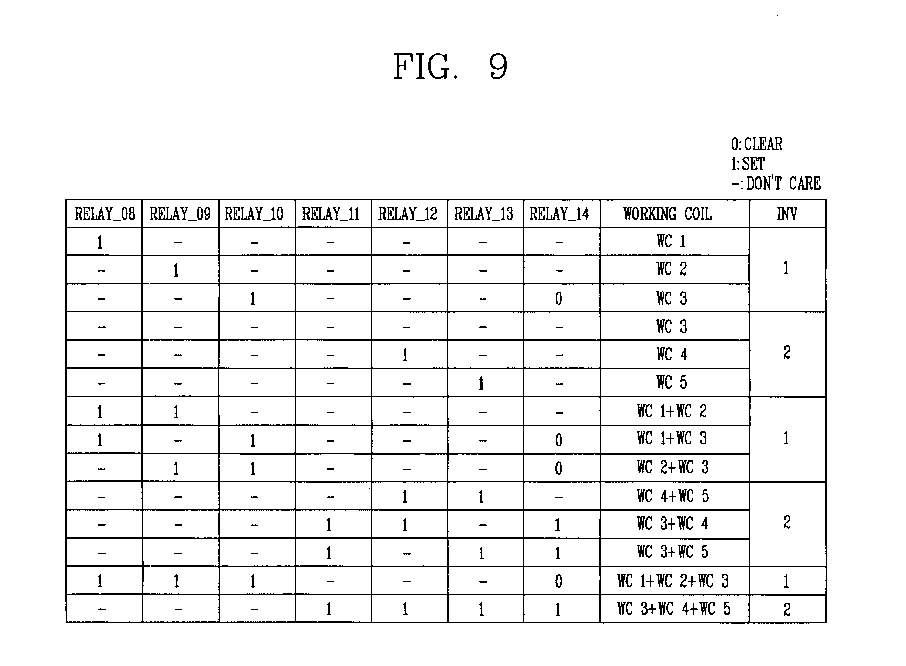

FIG. 8 shows another example of connections of the heating coils and the relays. Namely, although the same amount of inverters, heating coils, and relays is provided, the induction heating cooking apparatus illustrated in FIG. 7 may have connections different from those of the induction heating cooking apparatus of FIG. 5 or FIG. 7. Also, in this case, similarly, the control unit may output and closing signals to the relays connecting the heating coils corresponding to heating regions in which a vessel is placed, to heat the heating coils, Of course, number of cases may be different from that of FIG. 9.

Referring to FIG. 11, a method for controlling an induction heating cooking apparatus according to an embodiment of the present invention may include step (S100) of detecting one or more heating regions in which a vessel is placed, step (S200) of connecting one or more of the heating coils corresponding to the heating regions and one or more of the inverters by a plurality of relays, step (S300) of receiving a control command, and step (S400) of driving a corresponding inverter according to the control command. The configuration of the respective steps of the control method will be described with reference to FIGS. 2 to 10, together.

The step (S100) of detecting a heating region may include a process of detecting currents of the heating coils to output current values and a process of comparing the current values with a predetermined reference current value, and on the basis of the comparison results, one or more heating regions in which the vessel is placed are detected. Of course, the heating regions in which the vessel may also be detected by using a different type sensing value.

The method for controlling an induction heating cooking apparatus according to embodiments of the present invention will be described with reference to FIGS. 4 through 9.

FIG. 4 illustrates an example of a heating unit including ten heating coils. Referring to FIG. 5, five heating coils, among the heating coils of FIG. 4, and two inverters are connected, and a plurality of relays are provided between the heating coils and the inverters.

Referring to FIGS. 5 and 6, first inverter INV 1 and second inverter INV 2 apply a high frequency voltage to heating coils WC 1 to WC 5 through relays 1 to 7 RELAY_01 to RELAY _07, respectively.

A case in which a vessel is placed in a heating region handled by the heating coil 1 WC 1 will be described. Namely, when the vessel is placed on the heating coil 1 WC 1, a current value of the heating coil 1 WC 1 is changed, and when the changed current value is equal to or greater than a reference current value, it is determined that the vessel is placed in the heating region handled by the heating coil 1 WC 1 (S100). The heating coil 1 WC 1 receives power from the inverter 1 INV1 and the heating coil 1 WC1 and the inverter 1 INV1 are connected by the relay 1 RELAY_01, the relay 3 RELAY_03, and the relay 5 RELAY_05. Namely, the heating coil 1 WC 1 is connected to the inverter 1 INV 1 by the relay 1 RELAY_01 and the relay 3 RELAY_03 (S200). In this case, the control unit outputs an opening and closing signal 0 to the relay 1 RELAY_01, the opening and closing signal 0 to the relay 3 RELAY_03, and the opening and closing signal 0 to the relay 5 RELAY_05, respectively. Thereafter, the induction heating cooking apparatus receives a control command with respect to the vessel from the user (S300), and generates a control signal according to the control command to drive the inverter 1 INV 1 (S400).

Similarly, in the case of the heating coil 2 WC 2, the control unit outputs an opening and closing signal 1 to the relay 1 RELAY_01, the opening and closing signal 1 to the relay 3 RELAY_03, and the opening and closing signal 0 to the relay 5 RELAY_05. Namely, when it is detected that a vessel is placed on the heating coil 2 WC 2 (S100), in the induction heating cooking apparatus, the heating coil 2 WC 2 is connected to the inverter 1 INV 1 by the relay 1 RELAY_01, the relay 3 RELAY_03, and the relay 5 RELAY_05 and power is supplied to the heating coil 2 WC 2 (S200).

Meanwhile, the heating coil 3 WC 3 is connected to the inverter 1 by the relay 1 RELAY_01, relay 3 RELAY_03, the relay 5 RELAY_05, and a relay 7 RELAY_07. In order to heat the heating coil 3 WC3, the control unit outputs the opening and closing signal 1 to the relay 1 RELAY_01, the opening and closing signal 0 to the relay 3 RELAY_03, the opening and closing signal 1 to the relay 5 RELAY_05, and the opening and closing signal 0 to the relay 7 RELAY_07.

The heating coil 4 WC 4 and the heating coil 5 WC 5 receive power from the inverter 2 INV 2. Operations of the heating coil 4 WC 4 and the heating coil 5 WC 5 are referred to FIGS. 5 and 6.

When it is detected that the vessel is placed to extend over the heating coil 3 WC 3 and the heating coil 5 WC 5 (S100), in the induction heating cooking apparatus, the heating coil WC 3 and the heating coil 5 WC 5 are connected to the inverter 2 INV 2 through relays (S200). In this case, the control unit outputs opening and closing signals to the corresponding relays. In detail, the control unit outputs the opening and closing signal 1 to the relay 2 RELAY_02, the opening and closing signal 1 to the relay 4 RELAY_04, the opening and closing signal 1 to the relay 6 RELAY_06, and the opening and closing signal 1 to the relay 7 RELAY_07, to allow the heating coil 3 WC 3 and the heating coil 5 WC 5 to be connected to the inverter 2 INV 2. In this case, the heating coil 3 WC 3 and the hating coil 5 WC 5 are connected in series. Namely, since two heating coils are connected to one inverter in series, rather than in parallel, a current flowing in the heating coils is lowered. Thus, a rate current of the switching elements, e.g., the IGBT, the MOSFET, and the like, in the inverter can be lowered. Thereafter, the induction heating cooking apparatus drives the inverter 2 with respect to the heating coil 3 WC 3 and the heating coil 5 WC 5 according to a control command from the user (S300 and S400).

When it is detected that the vessel is placed to extend over the heating coil 3 WC 3 to the heating coil 5 WC 5 (S100), the control unit outputs the opening and closing signal 0 to the relay 2 RELAY_02 and the opening and closing signal 1 to the relay 4 RELAY_04 to a relay 7 RELAY_07 to allow the inverter 2 INV 2 to supply power to the heating coil 3 WC 3 to the heating coil 5 WC 5 (S200). Also, in this case, the heating coil 3 WC 3 to the heating coil 5 WC 5 are connected in series.

FIG. 7 shows another example of connections of the heating coils and the relays. Namely, although the same amount of inverters, heating coils, and relays is provided, the induction heating cooking apparatus illustrated in FIG. 7 may have connections different from those of the induction heating cooking apparatus of FIG. 5. Also, in this case, similarly, the control unit may output and closing signals to the relays connecting the heating coils corresponding to heating regions in which a vessel is placed, to heat the heating coils. Of course, a method for connecting the relays and the heating coils according to heating regions may be different from that of FIG. 6.

FIG. 8 shows another example of connections of the heating coils and the relays. Namely, although the same amount of inverters, heating coils, and relays is provided, the induction heating cooking apparatus illustrated in FIG. 7 may have connections different from those of the induction heating cooking apparatus of FIG. 5 or FIG. 7. Also, in this case, similarly, the control unit may output and closing signals to the relays connecting the heating coils corresponding to heating regions in which a vessel is placed, to heat the heating coils. Of course, number of cases may be different from that of FIG. 9.

Referring to FIGS. 8 and 9, the first inverter INV 1 and the second inverter INV 2 apply a high frequency voltage to the heating coils WC 1 to WC 5 through relays RELAY_08 to RELAY _14, respectively.

A case in which a vessel is placed in a heating region handled by the heating coil 1 WC 1 will be described. Namely, when the vessel is placed on the heating coil 1 WC 1, a current value of the heating coil 1 WC 1 is changed, and when the changed current value is equal to or greater than a reference current value, it is determined that the vessel is placed in the heating region handled by the heating coil 1 WC 1 (S100). The heating coil 1 WC 1 receives power from the inverter 1 INV1 and the heating coil 1 WC1 and the inverter 1 INV1 are connected by the relay 8 RELAY_08. Namely, the heating coil 1 WC 1 is connected to the inverter 1 INV 1 by the relay 8 RELAY_08 (S200). In this case, the control unit outputs an opening and closing signal 1 to the relay 8 RELAY_08. Thereafter, the induction heating cooking apparatus receives a control command with respect to the vessel from the user (S300), and generates a control signal according to the control command to drive the inverter 1 INV 1 (S400).

Similarly, in the case of the heating coil 2 WC 2, the control unit outputs an opening and closing signal 1 to the relay 9 RELAY_09. Namely, when it is detected that a vessel is placed on the heating coil 2 WC 2 (S100), the induction heating cooking apparatus connects the heating coil 2 WC 2 to the inverter 1 INV 1 by the relay 9 RELAY_09. and supplies power to the heating coil 2 WC 2 (S200).

Meanwhile, the heating coil 3 WC 3 may be connected to the inverter 1 INV 1 by a relay 10 RELAY_10 and a relay 14 RELAY_14, or may be connected to the inverter 2 INV 2 by a relay 11 RELAY_11 and the relay 14 RELAY_14. In order to heat the heating coil 3 WC3, the control unit outputs the opening and closing signal 1 to the relay 10 RELAY_10 and the opening and closing signal 0 to the relay 14 RELAY_14, respectively.

The heating coil 4 WC 4 and the heating coil 5 WC 5 receive power from the inverter 2 INV 2. In order to heat the heating coil 4 WC 4, the control unit outputs the opening and closing signal 1 to the relay 12 RELAY_12, and in order to heat the heating coil 5 WC 5, the control outputs the opening and closing signal 1 to the relay 13 RELAY_13, respectively.

When it is detected that the vessel is placed to extend over the heating coil 3 WC 3 to the heating coil 5 WC 5 (S100), the induction heating cooking apparatus connects the heating coil 3 WC 3 and the heating coil WC 4 to the inverter 2 INV 2through relays (S200). In this case, the control unit outputs opening and closing signals to the corresponding relays. Namely, the control unit outputs the opening and closing signal 1 to the relay 11 RELAY_11, the opening and closing signal 1 to the relay 12 RELAY_12, the opening and closing signal 1 to the relay 14 RELAY_14, in order to connect the heating coil 3 WC 3 and the heating coil 4 WC 4 to the inverter 2 INV 2. Thereafter, the induction heating cooking apparatus drives the inverter 2 with respect to the heating coil 3 WC 3 and the heating coil 4 WC 4 according to a control command from the user (S300 and S400).

As described above, the induction heating cooking apparatus and the control method thereof according to embodiments of the present invention can effectively heat a vessel regardless of a position of a vessel by using a plurality of heating coils. In the embodiments of the present invention, a plurality of heating coils are connected to a smaller amount of inverters through relays, whereby only a heating coil on which a vessel is placed, among the plurality of heating coils, may be heated. Also, by connecting the heating coils in series, a current flowing in the heating coil can be lowered, and thus, a rated current of the inverter can be lowered. In the embodiments of the present invention, relays and heating coils are connected such that a larger amount of heating coils are operated, while minimizing the amount of inverters, whereby manufacturing cost can be reduced, operation efficiency can be increased, and stability of the cooking apparatus can be enhanced.

The foregoing embodiments and advantages are merely exemplary and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. An induction heating cooking apparatus including a heating unit (110, 120) for heating a vessel placed in a heating region, the heating unit comprising
a plurality of heating coils (wc1, wc2, wc3, wc4) forming heating regions, respectively,
wherein the induction heating cooking apparatus comprises:
a plurality of inverters (210, 220) configured to supply a driving voltage to one or more of the heating coils;
a sensing unit (510, 520) configured to sense a current of the heating coils and output the current value;
a control unit (400) configured to compare the current value with a predetermined reference current value and detect one or more heating regions in which the vessel is placed on the basis of the comparison results and control the plurality of inverters according to a control command; and
a plurality of relays (310, 320) connecting the one or more heating coils corresponding to the heating regions detected by the control unit and the one or more of the inverters, on the basis of respective opening and closing signals; and
wherein heating coils connectable to a same inverter, among the heating coils corresponding to the detected heating regions, are connected in series to each other by relays.

2. The induction heating cooking apparatus of claim 1, wherein the amount of inverters is less than the amount of heating coils.

3. The induction heating cooking apparatus of claim 1 or 2, wherein each of the plurality of inverters is connected to some of the plurality of heating coils in order to supply the driving voltage thereto.

4. The induction heating cooking apparatus of claim 1, wherein the inverters are configured as one of a half-bridge type inverter, a full-bridge type inverter, and a Class E type inverter.

5. The induction heating cooking apparatus of claim 4, wherein the heating coils are flat litz wire type heating coils.

6. The induction heating cooking apparatus of claim 5, wherein the flat litz wire type coils are formed by compressing circular litz wire type heating coils.

7. The induction heating cooking apparatus of claim 6, wherein the heating unit further comprises resonance capacitors connected to the heating coils to generate resonance.

8. The induction heating cooking apparatus of claim 6, further comprising:
a converter (710, 720) configured to convert an input voltage from a commercial AC power source into a DC voltage and output the same;
a smoothing unit (810, 820) configured to smooth the DC voltage output from the converter; and
an input unit configured to receive a control command with respect to the heating unit.

9. The induction heating cooking apparatus of claim 8, wherein the heating unit comprises:
a first coil unit including two or more heating coils (WC1, WC2) driven by a first inverter (INV1), connected in series, and forming a first heating region;
a second coil unit including two or more heating coils (WC4, WC5) driven by a second inverter (INV2), connected in series, and forming a second heating region; and
a third coil unit including one or more heating coils (WC3) driven by the first inverter or the second inverter and connected to the first coil unit or the second coil unit in series or directly connected to the first inverter or the second inverter to form a third heating region.

10. A method for controlling an induction heating cooking apparatus including a heating unit (110, 120) configured to include a plurality of heating coils (WC1, WC2, WC3, WC4) forming heating regions and heat a vessel placed in each heating region, respectively, a plurality of inverters (210, 220) configured to supply a driving voltage to one or more of the heating coils, and a plurality of relays (310, 320), the method comprising:
sensing a current of the heating coils and outputting a current value;
comparing the current value with a predetermined reference current value;
detecting one or more heating regions in which the vessel is placed on the basis of the comparison results;
connecting the one or more heating coils corresponding to the heating regions and one or more of the inverters by the plurality of relays;
receiving a control command; and
driving a corresponding inverter according to the control command,
wherein heating coils connectable to a same inverter, among the heating coils corresponding to the detected heating regions, are connected in series to each other by relays.

## Patentansprüche

1. Induktionsheizungs-Kochvorrichtung, die eine Heizungseinheit (110, 120) zur Erwärmung eines Gefäßes aufweist, das in einem Heizbereich angeordnet ist, wobei die Heizungseinheit aufweist:
eine Vielzahl von Heizspulen (WC1, WC2, WC3, WC4), die jeweils Heizbereiche bilden,
wobei die Induktionsheizungs-Kochvorrichtung aufweist:
mehrere Wechselrichter (210, 220), die konfiguriert sind, einer oder mehreren der Heizspulen eine Betriebsspannung zuzuführen;
eine Abtasteinheit (510, 520), die konfiguriert ist, einen Strom der Heizspulen abzutasten und den Stromwert auszugeben;
eine Steuereinheit (400), die konfiguriert ist, den Stromwert mit einem vorgegebenen Bezugsstromwert zu vergleichen und einen oder mehrere Heizbereiche, in denen das Gefäß angeordnet ist, auf der Grundlage der Vergleichsergebnisse zu ermitteln und die mehreren Wechselrichter entsprechend einem Steuerbefehl zu steuern; und
mehrere Relais (310, 320), die die eine oder die mehreren Heizspulen, die den durch die Steuereinheit ermittelten Heizbereichen entsprechen, und den einen oder die mehreren Wechselrichter auf der Grundlage jeweiliger Öffnungs- und Schließsignale verbinden; und
wobei Heizspulen, die mit einem selben Wechselrichter verbindbar sind, unter den Heizspulen, die den ermittelten Heizbereichen entsprechen, durch Relais miteinander in Reihe geschaltet werden.

2. Induktionsheizungs-Kochvorrichtung nach Anspruch 1, wobei die Menge der Wechselrichter kleiner als die Menge der Heizspulen ist.

3. Induktionsheizungs-Kochvorrichtung nach Anspruch 1 oder 2, wobei jeder der mehreren Wechselrichter mit einigen mehreren Heizspulen verbunden ist, um diesen Betriebsspannung zuzuführen.

4. Induktionsheizungs-Kochvorrichtung nach Anspruch 1, wobei die Wechselrichter als ein Halbbrücken-Wechselrichter oder ein Vollbrücken-Wechselrichter oder ein Klasse-E-Wechselrichter konfiguriert sind.

5. Induktionsheizungs-Kochvorrichtung nach Anspruch 4, wobei die Heizspulen Flachlitzendraht-Heizspulen sind.

6. Induktionsheizungs-Kochvorrichtung nach Anspruch 5, wobei die Flachlitzendraht-Spulen durch Zusammendrücken von Rundlitzendraht-Heizspulen gebildet werden.

7. Induktionsheizungs-Kochvorrichtung nach Anspruch 6, wobei die Heizungseinheit ferner Resonanzkondensatoren aufweist, die mit den Heizspulen verbunden sind, um eine Resonanz zu erzeugen.

8. Induktionsheizungs-Kochvorrichtung nach Anspruch 6, die ferner aufweist:
einen Stromrichter (710, 720), der konfiguriert ist, eine Eingangsspannung aus einer kommerziellen Wechselstromquelle in eine Gleichspannung umzuwandeln und diese abzugeben;
eine Glättungseinheit (810, 820), die konfiguriert ist, die vom Stromrichter abgegebene Gleichspannung zu glätten; und
eine Eingabeeinheit, die konfiguriert ist, einen Steuerbefehl bezüglich der Heizungseinheit zu empfangen.

9. Induktionsheizungs-Kochvorrichtung nach Anspruch 8, wobei die Heizungseinheit aufweist:
eine erste Spuleneinheit, die zwei oder mehrere Heizspulen (WC 1, WC2) umfasst, die durch einen ersten Wechselrichter (INV1) betrieben werden, die in Reihe geschaltet sind und einen ersten Heizbereich bilden;
eine zweite Spuleneinheit, die zwei oder mehrere Heizspulen (WC4, WC5) umfasst, die durch einen zweiten Wechselrichter (INV2) betrieben werden, die in Reihe geschaltet sind und einen zweiten Heizbereich bilden; und
eine dritte Spuleneinheit, die eine oder mehrere Heizspulen (WC3) umfasst, die durch den ersten Wechselrichter oder den zweiten Wechselrichter betrieben werden und mit der ersten Spuleneinheit oder der zweiten Spuleneinheit in Reihe geschaltet sind oder direkt mit dem ersten Wechselrichter oder dem zweiten Wechselrichter verbunden sind, um einen dritten Heizbereich zu bilden.

10. Verfahren zum Steuern einer Induktionsheizungs-Kochvorrichtung, die eine Heizungseinheit (110, 120) aufweist, die konfiguriert ist, mehrere Heizspulen (WC1, WC2, WC3, WC4), die jeweils Heizbereiche bilden und ein Gefäß erwärmen, das in jedem Heizbereich angeordnet ist, mehrere Wechselrichtern (210, 220), die konfiguriert sind, einer oder mehreren der Heizspulen eine Betriebsspannung zuzuführen, und mehrere Relais (310, 320) aufzuweisen, wobei das Verfahren aufweist:
Abtasten eines Stroms der Heizspulen und Ausgeben eines Stromwerts;
Vergleichen des Stromwerts mit einem vorgegebenen Bezugsstromwert;
Ermitteln von einem oder mehreren Heizbereichen, in denen das Gefäß angeordnet ist, auf der Grundlage der Vergleichsergebnisse;
Verbinden der einen oder der mehreren Heizspulen, die den Heizbereiche entsprechen, und von einem oder mehreren der Wechselrichter durch die mehreren Relais;
Empfangen eines Steuerbefehls; und
Betreiben eines entsprechenden Wechselrichters entsprechend dem Steuerbefehl,
wobei Heizspulen, die mit einem selben Wechselrichter verbindbar sind, unter den Heizspulen, die den ermittelten Heizbereichen entsprechen, durch Relais miteinander in Reihe geschaltet werden.

## Revendications

1. Appareil de cuisson à chauffage par induction comportant une unité de chauffage (110, 120) pour le chauffage d'un récipient placé dans une zone de chauffage, ladite unité de chauffage comprenant
une pluralité de bobines de chauffage (WC1, WC2, WC3, WC4) formant des zones de chauffage respectives,
où l'appareil de cuisson à chauffage par induction comporte :
une pluralité d'inverseurs (210, 220) prévus pour alimenter en tension de commande une ou plusieurs des bobines de chauffage ;
une unité de détection (510, 520) prévue pour détecter un courant des bobines de chauffage et sortir la valeur du courant ;
une unité de commande (400) prévue pour comparer la valeur du courant à une valeur de référence définie du courant et détecter une ou plusieurs zones de chauffage où le récipient est placé sur la base des résultats de comparaison, et commander la pluralité d'inverseurs conformément à une instruction de commande ; et
une pluralité de relais (310, 320) connectant la ou les bobines de chauffage correspondant aux zones de chauffage détectées par l'unité de commande à l'inverseur ou aux inverseurs, sur la base de signaux d'ouverture et de fermeture respectifs ; et
où les bobines de chauffage pouvant être reliées à un même inverseur, parmi les bobines de chauffage correspondant aux zones de chauffage détectées, sont montées en série entre elles par des relais.

2. Appareil de cuisson à chauffage par induction selon la revendication 1, où le nombre d'inverseurs est inférieur au nombre de bobines de chauffage.

3. Appareil de cuisson à chauffage par induction selon la revendication 1 ou la revendication 2, où chaque inverseur de la pluralité d'inverseurs est relié à certaines bobines de la pluralité de bobines de chauffage afin d'alimenter celles-ci en tension de commande.

4. Appareil de cuisson à chauffage par induction selon la revendication 1, où les inverseurs sont configurés soit comme inverseurs en demi-pont, soit comme inverseurs en pont, soit comme inverseurs de classe E.

5. Appareil de cuisson à chauffage par induction selon la revendication 4, où les bobines de chauffage sont des bobines de chauffage à fils de Litz méplats.

6. Appareil de cuisson à chauffage par induction selon la revendication 5, où les bobines à fils de Litz méplats sont formées par compression de bobines de chauffage à fils de Litz circulaires.

7. Appareil de cuisson à chauffage par induction selon la revendication 6, où l'unité de chauffage comprend en outre des condensateurs à résonance reliés aux bobines de chauffage afin de générer une résonance.

8. Appareil de cuisson à chauffage par induction selon la revendication 6, comprenant en outre :
un convertisseur (710, 720) prévu pour convertir une tension d'entrée d'une source commerciale de courant AC en tension DC et sortir celle-ci ;
une unité de lissage (810, 820) prévue pour lisser la Tension DC sortie par le convertisseur ; et
une unité d'entrée prévue pour recevoir une instruction de commande relative à l'unité de chauffage.

9. Appareil de cuisson à chauffage par induction selon la revendication 8, où l'unité de chauffage comprend :
une première unité à bobines comportant au moins deux bobines de chauffage (WC 1, WC2) commandées par un premier inverseur (INVI), montées en série, et formant une première zone de chauffage ;
une deuxième unité à bobines comportant au moins deux bobines de chauffage (WC4, WC5) commandées par un deuxième inverseur (INV2), montées en série, et formant une deuxième zone de chauffage ; et
une troisième unité à bobines comportant au moins une bobine de chauffage (WC3) commandée par le premier inverseur ou par le deuxième inverseur et montée en série avec la première unité à bobines ou la deuxième unité à bobines ou reliée directement au premier inverseur ou au deuxième inverseur pour former une troisième zone de chauffage.

10. Procédé de commande d'un appareil de cuisson à chauffage par induction comportant une unité de chauffage (110,120) prévue pour comprendre une pluralité de bobines de chauffage (WC1, WC2, WC3, WC4) formant des zones de chauffage, et pour chauffer un récipient placé dans une zone de chauffage respective, une pluralité d'inverseurs (210, 220) prévus pour alimenter en tension de commande une ou plusieurs de bobines de chauffage, et une pluralité de relais (310, 320), ledit procédé comprenant :
la détection d'un courant des bobines de chauffage et la sortie d'une valeur du courant ; la comparaison de la valeur du courant à une valeur de référence définie du courant ;
la détection d'une ou de plusieurs zones de chauffage où le récipient est placé sur la base des résultats de comparaison ;
la connexion de la ou des bobines de chauffage correspondant aux zones de chauffage et à l'inverseur ou aux inverseurs par la pluralité de relais ;
la réception d'une instruction de commande ; et
la commande d'un inverseur correspondant conformément à l'instruction de commande, où les bobines de chauffage pouvant être reliées à un même inverseur, parmi les bobines de chauffage correspondant aux zones de chauffage détectées, sont montées en série entre elles par des relais.
